# FASCICULE DE BREVET EUROPEEN

(11) **EP 0 558 380 B1**
(45) Date de publication et mention de la délivrance du brevet: **01.05.1996**
(21) Numéro de dépôt: 93400402.9
(22) Date de dépôt: 17.02.1993
(51) Int. Cl.: B60R 22/26

(54) **Serrure à enclenchement automatique pour l'ancrage d'une ceinture de sécurité et son application à un siège arrière de véhicule**
Selbsttätig verriegelbares Schloss für eine Sicherheitsgurt-Verankerung und dessen Anwendung an einem Fahrzeug-Rücksitz
Automatic engaging lock for a seat belt anchor and its application to a vehicle's rear seat

(30) Priorité: 25.02.1992 FR 9202173
(43) Date de publication de la demande: 01.09.1993
(73) Titulaire: CESA COMPAGNIE EUROPEENNE DE SIEGES POUR AUTOMOBILES, F-92307 Levallois-Perret Cédex (FR); REGIE NATIONALE DES USINES RENAULT S.A., F-92109 Boulogne Billancourt (FR)
(72) Inventeur: Roman, Serge, F-45200 Montargis (FR); Colin, Jacques Pierre Marcel, F-45700 Montcresson (FR)
(74) Mandataire: Polus, Camille

(56) Documents cités:
- EP-A- 0 457 699

## Description

La présente invention concerne l'ancrage des ceintures de sécurité aux planchers des véhicules et, plus particulièrement, une serrure à enclenchement automatique pour l'ancrage amovible réglable d'au moins une ceinture de sécurité au plancher d'un véhicule automobile terrestre.

Comme on le sait, afin d'assurer la sécurité des occupants d'un véhicule, en particulier en cas de ralentissement brusque ou d'accident, les Pouvoirs Publics ont édicté des normes pour l'équipement et le port de ceintures de sécurité.

Lorsque de telles ceintures de sécurité ne font pas partie intégrante d'un siège qui ne comprend pas alors les deux ou trois points d'ancrage des brins thoracique et abdominal d'une sangle de ceinture, il est compliqué et onéreux de faire en sorte que l'un au moins de ces points d'ancrage soit réglable ou modifiable pour s'adapter à la morphologie de l'occupant ou à la position donnée au siège par ce dernier.

Cette difficulté se rencontre tout particulièrement pour les sièges arrière de véhicule lorsque ceux-ci se présentent, par exemple, sous la forme d'une banquette multiplace dont l'assise et le dossier sont souvent articulés et montés de manière à pouvoir se déplacer en translation parallèlement à l'axe longitudinal du véhicule et aussi à pouvoir s'incliner et/ou basculer selon au moins un axe orthogonal à cet axe longitudinal.

En effet, dans un tel cas, il faut que l'un au moins des points d'ancrage inférieurs de la ceinture de sécurité, habituellement situés approximativement à hauteur de la hanche de l'occupant du siège, puisse suivre celui-ci dans ses déplacements, que ce soit lors du réglage de la position longitudinale du siège ou que ce soit lors du basculement du siège pour dégager du volume et de la surface de plancher, aptes au chargement d'objets encombrants ou volumineux.

Une tentative de solution est par exemple exposée dans le document EP 0 457 699. La solution divulguée par ce document, si elle donne relativement satisfaction, ne permet toutefois pas de résoudre toutes les difficultés. En particulier, si l'occupant du siège désire modifier la position longitudinale de celui-ci, le point d'ancrage qui porte par exemple le pédoncule relié à l'un des éléments de la boucle de la ceinture de sécurité, ne se trouve momentanément plus amarré au plancher. Pendant le bref délai qui s'écoule entre la libération et le nouvel amarrage du point d'ancrage, l'occupant se trouve privé de toute protection par la ceinture de sécurité. Une autre difficulté tient à la construction proprement dite des véhicules et aux dispersions des cotes de fabrication entre des tolérances pourtant parfois relativement serrées. Tel est le cas par exemple d'un plancher de véhicule traditionnellement fait de pièces métalliques embouties mécanosoudées. L'intervalle des écarts entre les positions extrêmes d'un tel plancher peut avoisiner ou dépasser la dizaine de millimètres.

Le but de l'invention est de remédier à ce type d'inconvénients et, en particulier, à celui résultant des écarts de fabrication qui donnent au plancher d'un véhicule une position relative qui peut varier notablement.

L'invention a pour objet une serrure à enclenchement automatique pour l'ancrage amovible réglable d'au moins une ceinture de sécurité au plancher d'un véhicule, qui est auto-adaptative aux écarts de construction de manière à les compenser automatiquement.

L'invention a pour objet une serrure à enclenchement automatique pour l'ancrage amovible réglable d'au moins une ceinture de sécurité au plancher d'un véhicule portant un siège avec une assise dont l'armature est mobile par translation longitudinale et par rabattement selon un axe orthogonal à la translation, du type indiqué dans le document EP cité auparavant dont tous les éléments nécessaires à l'invention sont mentionnés dans le préambule de la revendication 1 et dont les particularités distinctives sont indiquées notamment dans la partie caractérisante de cette revendication.

L'invention a aussi pour objet l'application d'une telle serrure à un siège banquette arrière de véhicule.

D'autres caractéristiques de l'invention ressortiront de la lecture de la description et des revendications qui suivent ainsi que de l'examen du dessin annexé, donné seulement à titre d'exemple, où :
- la Figure 1 est une vue perspective schématique d'un mode de réalisation d'une serrure à enclenchement automatique pour l'ancrage amovible réglable d'au moins une ceinture de sécurité au plancher d'un véhicule selon l'invention;
- la Figure 2 est une vue en élévation schématique du mode réalisation de la serrure selon la Figure 1 illustrant l'amplitude de son débattement angulaire;

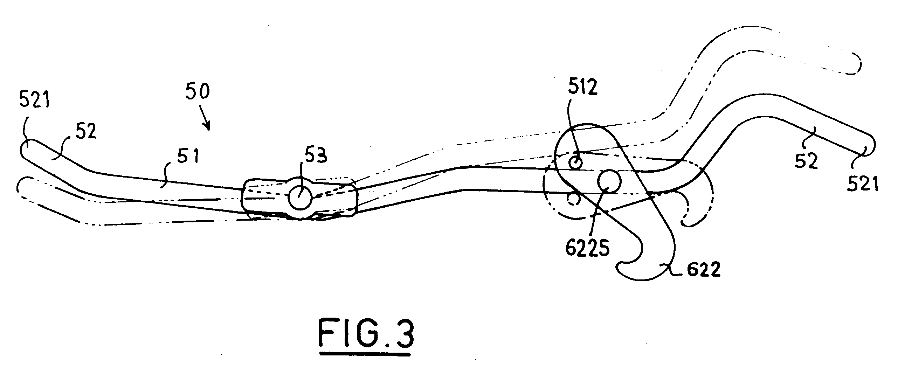

- la Figure 3 est une vue partielle simplifiée en élévation latérale de la serrure de la Figure 1 avec sa commande dans deux positions différentes de fonctionnement;
- les Figures 4 et 5 sont des vues analogues à celle de la Figure 3 mais plus complètes, illustrant la serrure de la Figure 1 respectivement à l'état décroché et à l'état accroché;

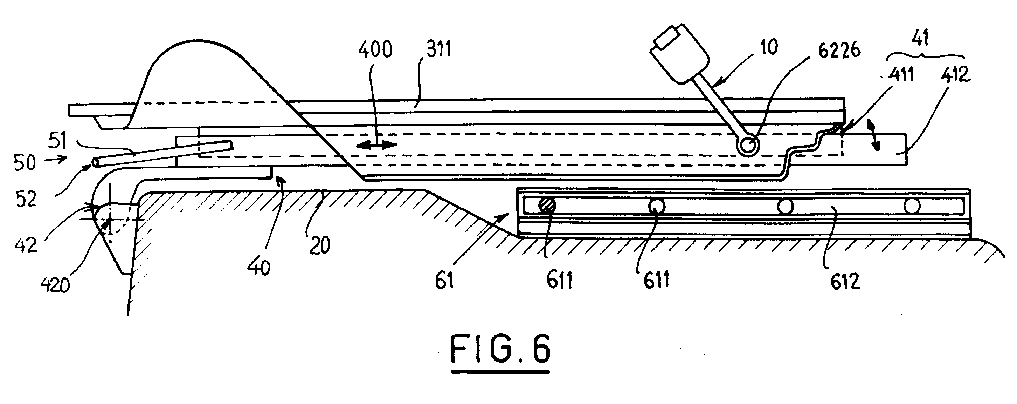

- la Figure 6 est une vue schématique en élévation montrant un siège installé sur un plancher et sur laquelle sont esquissés des constituants d'une serrure selon l'invention pour en situer la localisation relative;
- la Figure 7 est une vue similaire à celle de la Figure 1 d'une variante d'exécution d'une serrure selon l'invention;
- la Figure 8 est une section transversale partielle schématique selon la ligne VIII-VIII de la Figure 7; et

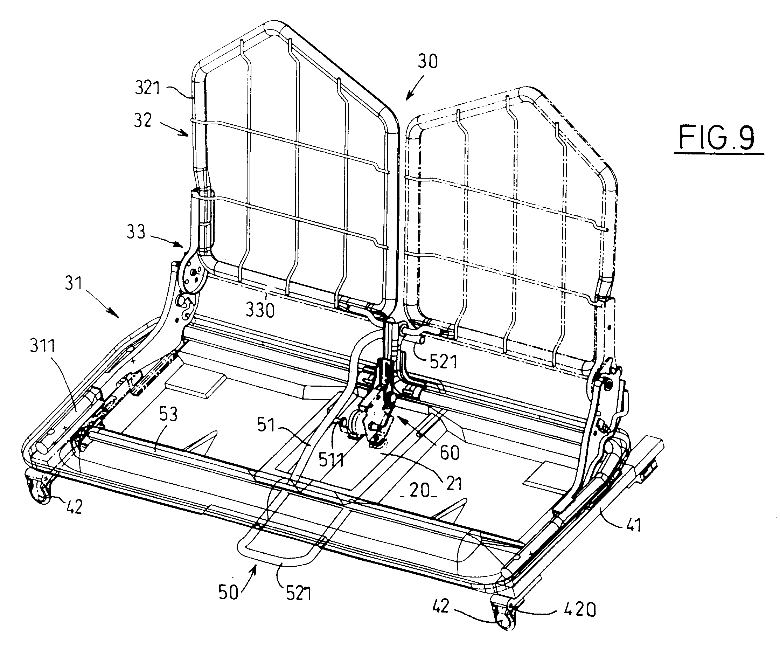

- la Figure 9 est une vue perspective d'ensemble d'un siège arrière équipé d'une serrure selon l'invention.

Les ceintures de sécurité, en particulier celles destinées aux véhicules automobiles terrestres, ainsi que les mécanismes qui leur sont associés étant bien connus dans la technique, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, un même numéro de référence identifie toujours un élément homologue, quel que soit le mode de réalisation ou sa variante d'exécution.

Pour la commodité de l'exposé, on décrira successivement chacun des constituants de l'invention avant d'en exposer le fonctionnement et, s'il y a lieu, la fabrication.

Dans ce qui suit, on prend pour référence la direction longitudinale de l'axe médian d'un véhicule et pour sens sur cet axe celui habituellement utilisé pour repérer l'avant et l'arrière de celui-ci.

Comme il est connu, une ceinture de sécurité comprend une boucle dont seule une partie est représentée schématiquement sur le dessin. C'est cette partie 10 de boucle qui est reliée à l'aide d'un pédoncule qui sert à son ancrage direct ou indirect, notamment au plancher d'un véhicule. Un tel pédoncule constitue un moyen de fixation.

Un plancher 20 de véhicule, illustré schématiquement, sert à l'ancrage direct ou indirect du pédoncule de la boucle de ceinture de sécurité 10. Ce plancher 20 sert, au moins localement, pour constituer un appui 21 pour les raisons que l'on comprendra par la suite.

Ce plancher 20 est destiné à porter au moins un siège 30 mono ou multiplace.

Ce siège 30 est, par exemple, une banquette arrière qui comprend une assise 31 avec une armature 311, et un dossier 32 avec une armature 321. Comme il est classique, l'assise 31 porte le dossier 32 à l'aide d'une ferrure 33 articulée qui relie les armatures 311 et 321 de chaque côté de manière que ces assise et dossier puissent s'incliner relativement l'un à l'autre, voire se rabattre selon un axe 330.

L'armature 311 de l'assise 31 est portée par le plancher 20 par l'entremise d'un montage 40 qui autorise un réglage de la position du siège 30 selon un axe 400 longitudinal du véhicule. Ce réglage longitudinal par translation peut être continu ou discontinu selon un pas préfixé plus ou moins important.

De même, le siège 30 est apte à basculer selon une direction perpendiculaire à la translation d'axe longitudinal, le plus souvent après rabattement du dossier contre l'assise, afin de dégager une surface de plancher qui autorise la mise en place de charges volumineuses.

Pour ce faire, le montage 40, de tout type courant classique, comprend une glissière 41 faite d'un élément supérieur 411 relié à l'armature 311 de l'assise 31 et d'un élément inférieur 412 relié au plancher 20. Cette glissière autorise un déplacement longitudinal en translation du siège. Ce montage 40 comprend aussi de préférence une charnière 42 ou analogue qui relie le plancher 20 à l'élément inférieur 412 de la glissière 41 de manière à permettre un basculement de l'assise, éventuellement associée au dossier, selon un axe 420 orthogonal à la direction longitudinale de translation.

Une commande 50 permet le réglage de la position longitudinale du siège ainsi que, le cas échéant, son basculement. Cette commande 50 comprend un levier 51 dont chacune des extrémités 52 est munie d'une poignée 521 pour les raisons qui apparaîtront par la suite. Comme on le voit, ce levier est monté sur un arbre 53 situé entre ses extrémités; cet arbre est, de préférence associé aux verrous des glissières pour permettre la commande du déverrouillage de ceux-ci et autoriser ainsi un réglage longitudinal. Les glissières et leurs verrous sont de tout type courant approprié. Comme on le voit, chacune des poignées 521 est préhensible de part et d'autre de l'assise 31 du siège pour les raisons que l'on comprendra par la suite.

Comme on le voit, la serrure 60 comprend, essentiellement, une gâche 61 et un pêne 62 articulé composite. Comme on le comprendra par la suite, la gâche 61 constitue un moyen de retenue et le pêne 62 constitue une pièce majeure.

La gâche 61 comprend au moins un barreau 611, orienté de préférence orthogonalement à l'axe longitudinal de translation. Le barreau 611 est soit unique, et alors il est réglable par translation selon l'axe longitudinal du véhicule et il peut être immobilisé et condamné dans la position où il a été placé par un moyen de liaison en translation approprié. Le barreau 611 peut être multiple et alors il est fixe. Dans le mode de réalisation illustré, le barreau 611 est multiple et relié à des barres latérales 612 fixées au plancher 20, parallèlement à l'axe longitudinal.

Comme on le voit, le pêne articulé composite 62 comprend, entre autres, un coffre 621 et un crochet 622.

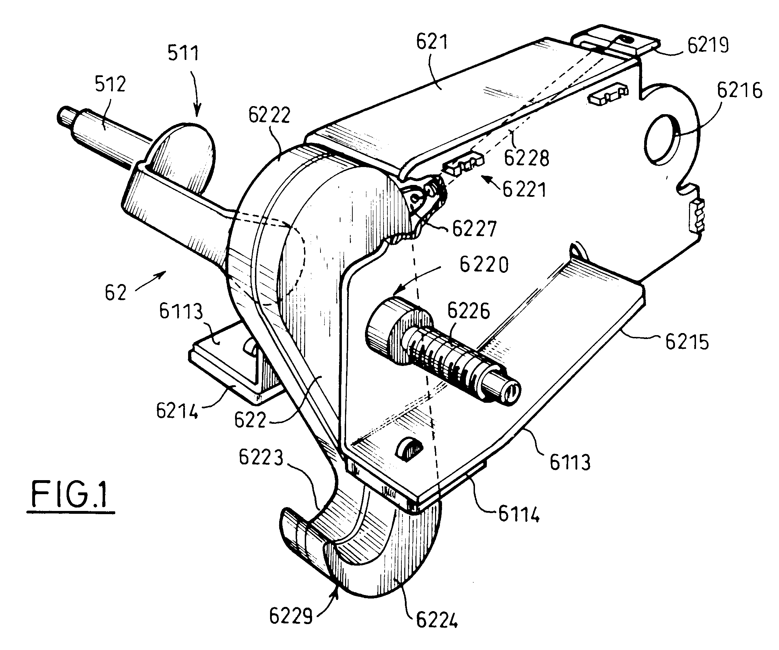

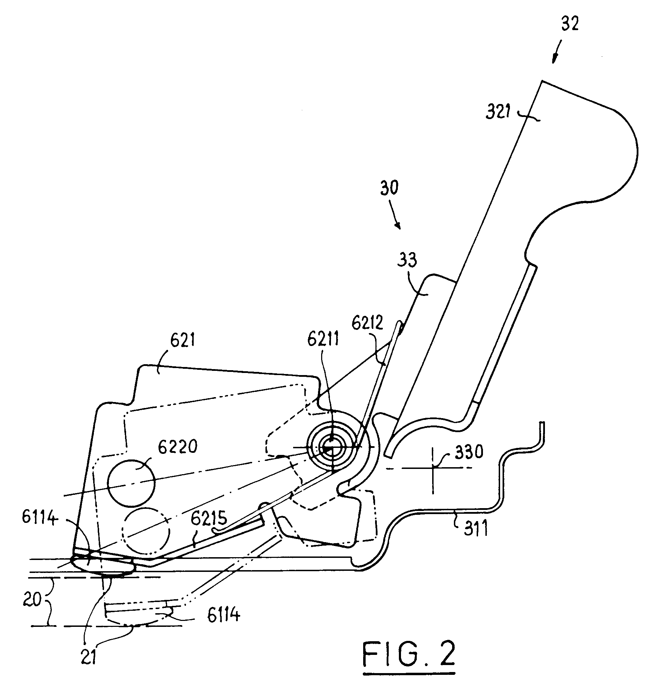

Le coffre 621 se présente comme un boîtier fait par exemple en tôle relativement épaisse, découpée, emboutie, poinçonnée, pliée, agrafée selon des techniques traditionnelles. Le coffre 621 est associé à l'armature 311 par une fixation 6211 autorisant un débattement relativement à celle-là selon une direction orthogonale à l'axe longitudinal de translation. Comme on le voit pour le mode de réalisation des Figures 1, 2, 4 et 5, cette fixation 6211 autorise un débattement angulaire et est constituée d'un orifice 6216 ménagé dans le coffre 621 et d'un trou 3110 ménagé dans l'armature 311 de l'assise 31. Dans ces orifice 6216 et trou 3110 est engagée une broche 6217. Un moyen de sollicitation élastique 6212 agit sur le coffre 621 pour le diriger vers le plancher 20 comme illustré. Comme on le voit, le coffre 621 présente au moins sur un côté une aile 6113, éventuellement munie d'un patin 6114 destiné à coopérer directement ou indirectement avec le plancher 20. Ce coffre 621 présente aussi s'il y a lieu un prolongement 6215, de préférence contigu à l'aile 6113 et par exemple incliné relativement à cette dernière. Ce prolongement 6215 est destiné à recevoir le moyen de sollicitation élastique 6212, tel un ressort en épingle à cheveux comme illustré, qui prend appui par exemple sur une ferrure 33 de manière à développer un couple qui tend à diriger le coffre vers le plancher, comme cela ressort de l'examen des figures.

Le crochet 622 est monté sur le coffre 621 de manière à y être mobile à l'aide d'une articulation 6220. Comme on le voit, cette articulation 6220 comprend un support 6218 sur le coffre 621 et un palier 6225 sur le crochet 622. Une tige 6226 est engagée simultanément dans le support 6218 et dans le palier 6225. S'il y a lieu, cette tige est filetée de manière à servir à l'ancrage d'au moins un pédoncule de ceinture de sécurité 10. Comme on le voit, le crochet 622 comprend un talon 6222, un évidement 6223 et un bec 6224. Comme on peut l'observer, l'articulation 6220 est située entre le talon 6222 et le bec 6224. Ce crochet est par exemple fait en tôle découpée.

Le crochet 622 est soumis à l'action d'un dispositif de sollicitation élastique 6221 qui est agencé de manière à tendre à assurer la mise en prise de ces barreau 611 et crochet 622. Comme on le voit, le dispositif de sollicitation élastique comprend une patte 6219 du coffre 621, une languette 6227 du crochet 622 et un ressort 6228 comme illustré, fixé à ces patte et languette. Le crochet 622 présente une rampe 6229 destinée à coopérer avec le barreau 611 pour provoquer son accrochage automatique à l'encontre du couple exercé par le dispositif de sollicitation élastique 6221.

Comme on peut l'observer, un bras manivelle 511 du dispositif de commande 50 est solidaire du crochet 622. Le bras manivelle 511 porte, de préférence, une cheville ou analogue 512 destinée à coopérer avec le levier 51, entre l'une de ses extrémités 52 et l'arbre 53, comme cela apparaît sur les figures du dessin.

Tous les constituants de la serrure selon l'invention sont faits dans des matériaux traditionnels tels que des tôles, des tubes et des barres qui sont travaillés et mis en forme et assemblés selon des techniques classiques. Le patin 6114 et la cheville 512 sont faits ou revêtus par exemple de matériaux synthétiques appropriés qui confèrent un petit coefficient de frottement. L'ensemble des constituants est réuni et monté comme cela ressort de l'examen des figures du dessin.

Comme on le comprend en regardant les figures du dessin, lorsque le siège 30 est en position normale d'utilisation, l'armature 311 de son assise 31 étant proche du plancher 20, le coffre 621 associé à l'armature 311 par la fixation 6211 est apte à se "débattre", à "flotter" ici angulairement, selon une direction orthogonale à l'axe longitudinal de translation et le moyen de sollicitation élastique 6212 qui agit sur le coffre 621 dirige ce dernier vers le plancher 20 de manière que le ou les patins 6114 soi(en)t appliqué(s) contre l'appui 21 du plancher, que ce soit directement lorsque la serrure est médiane ou indirectement lorsque la serrure est latérale, par l'intermédiaire par exemple de l'élément inférieur 412 de la glissière 41 pour les raisons que l'on comprendra par la suite. Ce degré de liberté permet donc de rattraper et de compenser automatiquement les écarts de position du plancher par rapport à sa position nominale théorique, et qui résultent des imperfections ou de la précision de la fabrication et/ou de la mise en place du plancher et de ce qu'il porte.

Le fonctionnement est le suivant.

On suppose que le crochet 622 est en prise avec un ou le barreau 611. Dans une telle situation, on voit que la serrure selon l'invention à la fois assure l'immobilisation du siège dans la position choisie et interdit son basculement et, simultanément, assure l'ancrage de la ceinture de sécurité dont le pédoncule est monté sur la tige filetée 6226. La conformation donnée au crochet 622 ainsi que son montage permettent de comprendre, en particulier en examinant les figures du dessin, que tout effort agissant sur le pédoncule de la ceinture de sécurité à la suite d'une décélération brusque résultant d'un freinage énergique ou d'une collision, s'exerce dans un sens qui favorise l'ancrage.

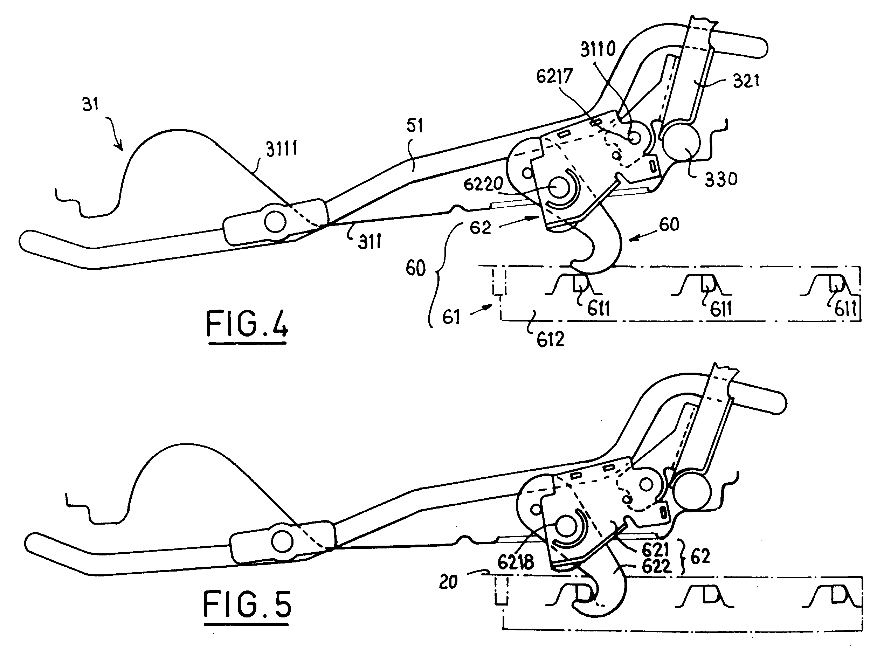

Si maintenant à partir de la situation exposée auparavant on souhaite changer la position du siège, soit pour en modifier le réglage longitudinal, soit pour le basculer, on saisit l'une des poignées 521 du levier 51. Si l'on saisit la poignée antérieure et qu'on tire celle-ci vers le haut ou bien si l'on saisit la poignée postérieure et qu'on pousse celle-ci vers le bas, on voit que le levier 51 fait basculer dans le sens anti-horaire, le crochet 622 sur son articulation 6220 en prenant appui sur la cheville 512 du bras manivelle 511 solidaire du crochet 622. En basculant dans ce sens, le crochet 622 libère le barreau 611 avec lequel il était en prise. Ce dégagement est facilité par la forme donnée au bec 6224 qui tient compte de sa position par rapport à la tige filetée 6226 de l'articulation. Une fois dégagé et la poignée libérée, le crochet 622 reprend sa position initiale sous l'action du couple développé par le dispositif de sollicitation élastique 6221. Simultanément, les verrous des glissières ont été déverrouillés. Il suffit maintenant de faire coulisser en translation longitudinale le siège dans un sens ou dans l'autre jusqu'à ce que le crochet rencontre un barreau suivant ou le barreau déplacé et les verrous des glissières se réenclenchent. La nouvelle situation correspond à celle illustré sur la Figure 5.

Si l'on souhaite remettre en place le siège après qu'il ait été préalablement basculé vers l'avant pour libérer la surface du plancher dans la même position longitudinale ou dans une autre définie par un autre barreau ou après déplacement du barreau originel, il suffit de repousser fermement l'assise, pour le cas où sa masse ne serait pas suffisante, vers le plancher. On voit que la rampe 6229 du bec 6224 rencontre alors le barreau 611 et le crochet 622 est repoussé dans le sens anti-horaire en basculant autour de l'articulation 6220, et cela sous l'action du couple exercé par le dispositif de sollicitation élastique. La serrure se comporte alors comme un mécanisme à échappement, et le crochet vient se remettre en prise automatiquement sur le barreau.

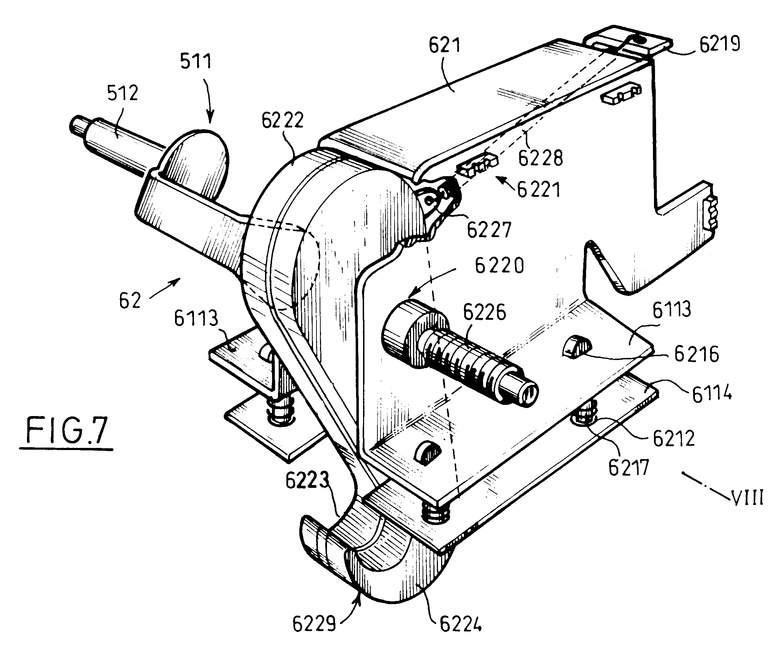

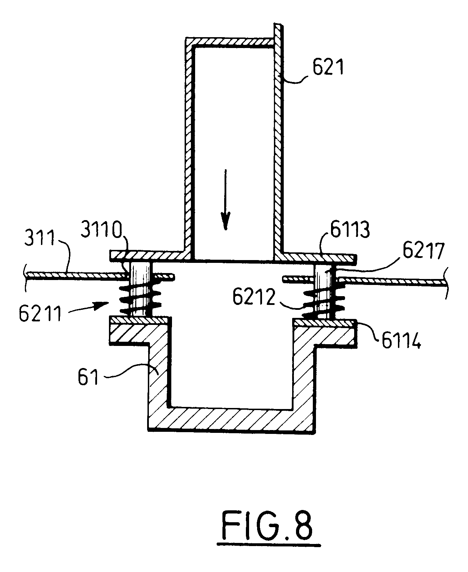

On se reportera maintenant aux Figures 7 et 8 qui illustrent un autre mode de réalisation de l'invention. Pour cette solution, la fixation 6211 qui associe le coffre 621 à l'armature 311, autorise un débattement relatif de celui-ci par rapport à celle-là, ici en translation approximativement verticale, selon une direction orthogonale à l'axe longitudinal de translation dont il a été question auparavant. Cette fixation 6211 est constituée d'orifices 6216 qui transpercent une au moins des ailes 6113 et dans chacun desquels est engagée et fixée une broche 6217. Un patin 6114 servant de semelle est monté et fixé à chaque extrémité des broches associées à une même aile, comme dessiné. Le moyen de sollicitation élastique 6212 se présente alors par exemple sous la forme de ressorts à boudin enfilés sur chacune des broches, comme illustré, entre aile et patin de manière à pouvoir prendre appui contre l'armature 311.

Lorsque cette serrure selon l'invention est montée sur un véhicule, les ressorts à boudin prennent normalement appui d'une part, sur le ou les patin(s) et, d'autre part, sur l'armature de l'assise de manière à solliciter vers le bas le coffre, comme illustré par une flèche.

Le fonctionnement de ce mode de réalisation est analogue à celui du précédent. On observera seulement que le débattement relatif est soit angulaire, soit rectiligne selon le cas.

Dans ce qui précède, on suppose que la serrure à enclenchement automatique pour ancrage amovible réglable d'une ceinture de sécurité est utilisée avec une banquette arrière à deux places et qu'elle est située approximativement sur l'axe longitudinal médian du véhicule qui sépare les deux places de manière à ce que les pédoncules de deux boucles distinctes puissent y être fixés. Toutefois, il est clair que l'on peut utiliser autant de serrures selon l'invention qu'il y a de ceintures de sécurité et qu'une telle serrure peut être placée indifféremment à droite ou à gauche d'un siège.

La lecture qui précède permet de comprendre tous les avantages apportés par une serrure selon l'invention.

## Revendications

1. Serrure à enclenchement automatique pour l'ancrage amovible réglable d'au moins une ceinture de sécurité (10) au plancher (20) d'un véhicule portant un siège (30) avec une assise (31) dont l'armature (311) est mobile par translation longitudinale et par rabattement selon un axe orthogonal à la translation par l'entremise d'un montage (40) monté sur le plancher (20) et une commande (50) montée sur l'armature (311) pour le réglage de la position du siège (30) relativement au plancher (20), cette serrure (60) qui comprend une gâche (61) montée sur le plancher (20) et faite entre autres d'au moins un barreau (611), et un pêne (62) avec un coffre (621) associé à l'armature (311) et un crochet (622) qui est monté mobile sur ce coffre (621) à l'aide d'une articulation (6220) et qui est apte à coopérer avec ce barreau (611) et un dispositif de sollicitation élastique (6221) tendant à assurer la mise en prise de ces barreau (611) et crochet (622) est caractérisée en ce que ce coffre (621) est associé à cette armature (311) par une fixation (6211) qui autorise un débattement relativement à celle-ci (311) selon une direction orthogonale à la translation, un moyen de sollicitation élastique (6212) agissant sur ce coffre (621) pour le diriger vers le plancher (20) et le faire coopérer directement ou indirectement avec lui.

2. Serrure selon la revendication 1, caractérisée en ce que le crochet (622) comprend un talon (6222), un évidement (6223) et un bec (6224) et en ce que l'articulation (6220) est située entre talon (6222) et bec (6224).

3. Serrure selon la revendication 2, caractérisée en ce que l'articulation (6220) comprend un support (6218) dans le coffre (621), un palier (6225) dans le crochet (622) et une tige (6226) engagée dans ces support (218) et palier (6225).

4. Serrure selon la revendication 3, caractérisée en ce que le tige (6226) est apte à recevoir une partie de la boucle de la ceinture de sécurité (10).

5. Serrure selon l'une quelconque des revendications 1 à 4, caractérisée en ce que le dispositif de sollicitation élastique (6221) comprend une patte (6219) du coffre (621), une languette (6227) du crochet (622) et un ressort (6228) fixé à ces patte (6219) et languette (6227).

6. Serrure selon l'une quelconque des revendications 1 à 5 caractérisée en ce que le crochet (622) présente une rampe (6229) destinée à coopérer avec ce barreau (611) pour provoquer son accrochage sur ce dernier à l'encontre du couple exercé par le dispositif de sollicitation élastique (6221).

7. Serrure selon l'une quelconque des revendications 1 à 6, caractérisée en ce que la commande (50) comprend un levier (51) dont chacune des extrémités (52) est préhensible de part et d'autre de l'assise (31) du siège (30) et qui est monté sur un arbre (53) associé à l'armature (311), et coopérant avec ce levier (51) entre l'une de ses extrémités (52) et cet arbre (53) un bras-manivelle (511) solidaire du crochet (622).

8. Serrure selon l'une quelconque des revendications 1 à 7, caractérisée en ce que ce coffre (621) est destiné à porter directement voire indirectement contre le plancher (20).

9. Serrure selon la revendication 8, caractérisée en ce que ce coffre (621) présente au moins une aile (6113) destinée à coopérer avec le plancher (20).

10. Serrure selon la revendication 9, caractérisée en ce que cette aile (6113) est munie d'un patin (6114).

11. Serrure selon l'une des revendications 9 ou 10, caractérisée en ce que ce coffre (621) présente un prolongement (6215) pour recevoir le moyen de sollicitation élastique (6212).

12. Serrure selon la revendication 11, caractérisée en ce que prolongement (6215) et aile (6113) sont contigus et inclinés relativement l'un à l'autre.

13. Serrure selon l'une quelconque des revendications 1 à 12, caractérisée en ce que la fixation (6211) comprend au moins un orifice (6216) dans le coffre (621) et un trou (3110) dans l'armature (311) de l'assise (31) dans lesquels est engagée une broche (6217).

14. Serrure selon la revendication 9, caractérisée en ce que l'aile (6113) est transpercée d'au moins un orifice (6216), en ce qu'une broche (6217) est engagée dans chaque orifice (6216), en ce que cette broche (6217) porte à l'une de ses extrémités un patin (6214) et en ce que sur chaque broche, entre aile (6113) et patin (6114), est enfilé un moyen de sollicitation élastique (6212).

15. Application d'une serrure conforme à l'une quelconque des revendications 1 à 14 à un siège banquette arrière de véhicule.

## Claims

1. An automatic engaging lock for the adjustable and detachable anchorage of at least one seat belt (10) to the floor (20) of a vehicle having a seat (30) with a base (31), the frame (311) thereof being displaceable by longitudinal movement and by folding down along an axis at right angles to the movement by way of an assembly (40) mounted on the floor (20) and a control (50) mounted on the frame (311) for adjusting the position of the seat (30) in relation to the floor (20), wherein the said lock (60) comprises a keeper (61) mounted on the floor (20) and comprising, among other parts, at least one small bar (611), and a slide bolt (62) with a box (621) associated with the frame (311), and a hook (622) displaceably mounted on the said box (621) with the aid of an articulation assembly (6220) and adapted to co-operate with the said small bar (611), and a resilient pulling device (6221) causing engagement of the small bar (611) and the hook (622), **characterised in that** the said box (621) is associated with the said frame (311) by a fastening member (6211) which ensures clearance in relation to the frame (311) in a direction at right angles to the movement, and a resilient pulling means (6212) acts on the said box (621) to direct it towards the floor (20) and to make it co-operate directly or indirectly therewith

2. A lock according to Claim 1, **characterised in that** the hook (622) comprises a shoulder (6222), a recess (6223) and a nose (6224), and the articulation assembly (6220) is located between the shoulder (6222) and the nose (6224).

3. A lock according to Claim 2, **characterised in that** the articulation assembly (6220) comprises a support (6218) in the box (621), a bearing (6225) in the hook (622) and a rod (6226) engaged in the support (218) [sic] and the bearing (6225)

4. A lock according to Claim 3, **characterised in that** the rod (6226) is designed to receive a part of the seat belt buckle (10).

5. A lock according to any one of Claims 1 to 4, **characterised in that** the resilient pulling device (6221) comprises a clip (6219) of the box (621), a lug (6227) of the hook (622) and a spring (6228) attached to the clip (6219) and the lug (6227).

6. A lock according to any one of Claim 1 to 5, **characterised in that** the hook (622) has an incline (6229) intended to co-operate with the said small bar (611) to bring about locking thereon against the torque exerted by the resilient pulling device (6221).

7. A lock according to any one of Claims 1 to 6, **characterised in that** the control (50) comprises a lever (51), each end of which can be grasped at both sides old the base (31) of the seal (30) did which is mounted on a shaft (53) associated with the frame (311), and a crank arm (511) rigidly connected with the hook (622) co-operates with the said lever (51) between one of the ends (52) thereof and the said shaft (53)

8. A lock according to any one of Claim 1 to 7, **characterised in that** the said box (621) is intended to rest directly or even indirectly against the floor (20).

9. A lock according to Claim 8, **characterised in that** the said box (621) has at least one flange (6113) intended to co-operate with the floor (20).

10. A lock according to Claim 9, **characterised in that** the said wing (6113) is provided with a block (6114).

11. A lock according to either Claim 9 or 10, **characterised in that** the said box (621) has an extension (6215) to receive the resilient pulling means (6212).

12. A lock according to Claim 11, **characterised in that** the extension (6215) and the wing (6113) are adjacent and inclined in relation to each other.

13. A lock according to any one of claims 1 to 12, **characterised in that** the fastening means (6211) comprises at least one opening (6216) in the box (621) and a hole (3110) in the frame (311) of the base (31) in which a pin (6217) is engaged.

14. A lock according to Claim 9, **characterised in that** the wing (6113) is penetrated by at least one opening (6216), that a pin (6217) is engaged in each opening (6216), that one end of the said pin (6217) has a block (6214) [sic], and that a resilient pulling means (6212) is threaded on each pin between the wing (6113) and the block (6114).

15. An application of a lock according to any one of Claims 1 to 14 to a vehicle's rear bench seat.

## Patentansprüche

1. Verschlußvorrichtung mit automatischer Verrastung für die einstellbare, abnehmbare Verankerung von zumindest einem Sicherheitsgurt (10) am Bodenblech (29) eines Fahrzeugs, das einen Sitz (30) mit einer Sitzfläche (31) trägt, deren Gerüst (311) durch Längstranslation und durch Umlegen um eine Achse, die orthogonal zur Translation angeordnet ist, durch Verwendung einer auf dem Bodenblech (20) montierten Montage (40) und einer auf dem Gerüst (311) zur Einstellung der Position des Sitzes (30) in bezug auf das Bodenblech (20) montierten Steuerung (50) beweglich ist, wobei diese Verschlußvorrichtung (60), welche einen Schließhaken (61), der auf dem Bodenblech (20) montiert ist und unter anderem aus zumindest einem Stab (611) besteht, einen Riegel (62) mit einem Kasten (621), der mit dem Gerüst (311) verbunden ist, einen Haken (622), der beweglich auf dem Kasten (621) mittels eines Gelenks (6220) montiert ist und der mit diesem Stab (611) zusammenwirken kann, und eine Vorrichtung für elastische Beanspruchung (6221) umfaßt, die das Ineinandergreifen dieser Stäbe (611) und des Hakens (622) gewährleisten soll, dadurch gekennzeichnet ist, daß der Kasten (621) mit dem Gerüst (311) durch eine Befestigung (6211) verbunden ist, die eine Verschiebbarkeit in bezug auf dieses (311) nach einer Richtung, die zur Translation orthogonal ist, ermöglicht, wobei ein Mittel für elastische Beanspruchung (6212) auf diesen Kasten (621) einwirkt, um ihn zum Bodenblech (20) hin zu bewegen und ein direktes oder indirektes Zusammenwirken mit diesem zu bewirken.

2. Verschlußvorrichtung nach Anspruch 1, dadurch gekennzeichnet, daß der Haken (622) einen Ansatz (6222), eine Aussparung (6223) und eine Spitze (6224) umfaßt, und daß das Gelenk (6220) zwischen dem Ansatz (6222) und der Spitze (6224) angeordnet ist.

3. Verschlußvorrichtung nach Anspruch 2, dadurch gekennzeichnet, daß das Gelenk (6220) eine Stütze (6218) in dem Kasten (621), ein Lager (6225) in dem Haken (622) und eine Stange (6226) umfaßt, Die in diese Stütze (6218) und dieses Lager (6225) eingreift.

4. Verschlußvorrichtung nach Anspruch 3, dadurch gekennzeichnet, daß die Stange (6226) einen Teil der Schnalle des Sicherheitsgurts (10) aufnehmen kann.

5. Verschlußvorrichtung nach einem der Ansprüche 1 bis 4, dadurch gekennzeichnet, daß die Vorrichtung für elastische Beanspruchung (6221) ein Befestigungseisen (6219) des Kastens (621), eine Lasche (6227) des Hakens (622) und eine Feder (6228) umfaßt, die an diesem Befestigungseisen (6219) und dieser Lasche (6227) befestigt ist.

6. Verschlußvorrichtung nach einem der Ansprüche 1 bis 5, dadurch gekennzeichnet, daß der Haken (622) eine Rampe (6229) aufweist, der mit diesem Stab (611) zusammenwirken soll, um dessen Verhaken auf letztgenanntem gegen das Moment zu bewirken, das durch die Vorrichtung für elastische Beanspruchung (6221) ausgeübt wird.

7. Verschlußvorrichtung nach einem der Ansprüche 1 bis 6, dadurch gekennzeichnet, daß die Steuerung (50) einen Hebel (51) umfaßt, dessen Enden (52) jeweils auf beiden Seiten der Sitzfläche (31) des Sitzes (30) greifbar sind, und der auf einer Welle (53) montiert ist, die mit dem Gerüst (311) verbunden ist, wobei mit diesem Hebel (51) zwischen einem seiner Enden (52) und dieser Welle (53) eine Kurbelwange (511), die mit dem Haken (622) verbunden ist, zusammenwirkt.

8. Verschlußvorrichtung nach einem der Ansprüche 1 bis 7, dadurch gekennzeichnet, daß dieser Kasten (621) direkt oder indirekt gegen das Bodenblech (20) bewegt werden soll.

9. Verschlußvorlichtung nach Anspruch 8, dadurch gekennzeichnet, daß dieser Kasten (621) zumindest einen Flugel (6113) aufweist, der mit dem Bodenblech (20) zusammenwirken soll.

10. Verschlußvorrichtung nach Anspruch 9, dadurch gekennzeichnet, daß dieser Flügel (6113) mit einem Tragsegment (6114) versehen ist.

11. Verschlußvorrichtung nach einem der Ansprüche 9 oder 10, dadurch gekennzeichnet, daß dieser Kasten (621) eine Verlängerung (6215) aufweist, die das Mittel für elastische Beanspruchung (6212) aufnehmen soll.

12. Verschlußvorrichtung nach Anspruch 11, dadurch gekennzeichnet, daß Verlängerung (6215) und Flügel (6113) aneinander angrenzen und zueinander geneigt sind.

13. Verschlußvorrichtung nach einem der Ansprüche 1 bis 12, dadurch gekennzeichnet, daß die Befestigung (6211) zumindest eine Öffnung (6216) in dem Kasten (621) und ein Loch (3110) in dem Gerüst (311) der Sitzfläche (31) unfaßt, in die ein Dorn (6217) eingreift.

14. Verschlußvorrichtung nach Anspruch 9, dadurch gekennzeichnet, daß der Flügel (6113) von zumindest einer Öffnung (6216) durchstoßen wird und daß ein Dorn (6217) in jede Öffnung (6216) eingreift, daß dieser Dorn (6217) an einem seiner Enden ein Tragsegment (6214) trägt und daß über jeden Dorn zwischen Flügel (6113) und Tragsegment (6114) ein Mittel für elastische Beanspruchung (6212) ubergezogen ist.

15. Anwendung einer Verschlußvorrichtung nach einem der Ansprüche 1 bis 14 für eine Rücksitzbank eines Fahrzeuges.
